# EUROPÄISCHE PATENTSCHRIFT

(11) **EP 1 613 939 B1**
(45) Veröffentlichungstag und Bekanntmachung des Hinweises auf die Patenterteilung: **13.04.2016**
(21) Anmeldenummer: 04713842.5
(22) Anmeldetag: 24.02.2004
(51) Int. Cl.: G01K 7/36, H05B 6/06

(54) **ANORDNUNG UND VERFAHREN ZUR BESTIMMUNG VON TEMPERATUREN**
ARRANGEMENT AND METHOD FOR DETERMINING TEMPERATURES
SYSTEME ET PROCEDE POUR DETERMINER DES TEMPERATURES

(30) Priorität: 25.02.2003 DE 10309505
(43) Veröffentlichungstag der Anmeldung: 11.01.2006
(73) Patentinhaber: MGS Modular Galley Systems GmbH, 70178 Stuttgart (DE)
(72) Erfinder: Walter, Hubert Eric, 89073 Ulm (DE); Haas, Karl-Heinz, 88480 Achtstetten (DE)
(74) Vertreter: Schicker, Silvia
(86) Internationale Anmeldenummer: PCT/DE2004/000397
(87) Internationale Veröffentlichungsnummer: WO 2004/077000

(56) Entgegenhaltungen:
- EP-A- 1 420 613
- DE-A- 19 818 831
- US-A- 3 742 173
- US-A- 3 781 506
- US-A- 4 151 387

## Beschreibung

Die Erfindung betrifft eine Anordnung und ein Verfahren zur Bestimmung von Temperaturen oder Temperatur-änderungen im Bereich eines elektromagnetischen Feldes mindestens einer Induktionsspule. Die Erfindung kann, insbesondere zur Messung von Temperaturen oder Temperaturänderungen von Gegenständen, die sich innerhalb des elektromagnetischen Feldes von Induktionsspulen befinden und durch zumindest teilweise elektrische Leitfähigkeit oder ferromagnetische Eigenschaften infolge der induktionsbedingten Wirbelströme erwärmen, aber auch zur Regelung einer solchen Erwärmung eingesetzt werden.

Für die berührungslose Messung von Temperaturen werden in der Regel optische Mess-Systeme benutzt. Solche an sich bekannten optischen Systeme sind aber zum einen kostenintensiv und zum anderen kann häufig keine optische Messung durchgeführt werden, da die Umgebungsbedingungen eine optische Erfassung nicht zulassen.

Aus US 3,950,993 ist ein Temperatursensor bekannt, bei dem zwei induktive Elemente mit unterschiedlichen magnetischen Eigenschaften verwendet werden und dabei ausgenutzt wird, dass sich die magnetische Permeabilität dieser beiden Elemente temperaturabhängig ändert. Diese beiden Elemente sind bei der dort beschriebenen Lösung miteinander verschaltet, so dass mit einem so genannten Nulldetektor eine einzige Temperatur detektiert werden kann, wenn die elektrische Spannung der beiden induktiven Elemente gleich ist. Die jeweilige Temperatur kann nur verändert werden, wenn die magnetischen Parameter mindestens eines der beiden Elemente variiert wird.

Eine Messung mehrerer unterschiedlicher Temperaturen oder Temperaturänderungen kann mit dieser bekannten Lösung nicht ohne weiteres durchgeführt werden.

Es ist daher Aufgabe der Erfindung, eine kostengünstige Lösung vorzuschlagen, mit der Temperaturen oder Temperaturänderungen induktiv berührungslos bestimmt werden können.

Aus US 3,742,173 ist eine Möglichkeit bekannt, bei der die elektrische Leistung von für die Erwärmung eingesetzten Induktionsspulen auf vorgegebene Werte geregelt werden kann. Dies kann durch Bestimmung elektrischer Parameter erfolgen.

Das US 3,781,506 betrifft Möglichkeiten zur Erzeugung einer bestimmten Wechselspannung mit der Induktionsspulen beaufschlagt werden. Das zeitliche Verhalten des elektrischen Stroms und ggf. auch der elektrischen Spannung soll dabei zur Temperaturbestimmung genutzt werden können.

Erfindungsgemäß wird diese Aufgabe mit einer Anordnung, die die Merkmale des Anspruchs 1 sowie mit einem Verfahren, das die Merkmale des Anspruchs 16 aufweist, gelöst werden. Vorteilhafte Ausgestaltungsformen und Weiterbildungen der Erfindung, können mit den in den untergeordneten Ansprüchen genannten Merkmalen erreicht werden.

Die erfindungsgemäße Lösung verwendet mindestens eine Induktionsspule in deren Bereich des elektromagnetischen Feldes Temperaturen oder auch Temperaturänderungen bestimmt werden können. Die mindestens eine Induktionsspule ist dabei in der Regel in herkömmlicher Form an einen Wechselrichter oder Frequenzwandler angeschlossen, der wiederum mit einer Spannungsversorgungseinrichtung elektrisch leitend verbunden ist. Die Gleich- oder Wechselspannung, mit der der Wechselrichter oder Frequenzwandler von der Spannungsversorgungseinrichtung beaufschlagt wird, wird vorzugsweise in eine Wechselspannung mit entsprechend geeigneter Frequenz umgewandelt und dadurch mit der mindestens einen Induktionsspule ein elektromagnetisches Wechselfeld erzeugt. Ein solches Wechselfeld kann auch mit einer bekannten, bevorzugt konstanten Ausgangsfrequenz einer Spannungsversorgungseinrichtung erzeugt werden, an die die jeweilige Induktionsspule direkt, unter Verzicht von Wechselrichter oder Frequenzwandler, angeschlossen ist. Eine Induktionsspule kann als reine Messspule für die Temperaturbestimmung genutzt werden.

Ändert sich nunmehr aber die Temperatur eines elektrisch leitenden Gegenstandes im Bereich dieses elektromagnetischen Feldes, beispielsweise durch induktive Erwärmung eines dort angeordneten Gegenstandes, beeinflusst diese Temperaturänderung die elektrischen Parameter des vorab beschriebenen Stromkreises und die Temperatur kann mit einer Messeinrichtung, mit der die sich temperaturabhängig verändernde elektrische Leistung, der Frequenz, Impedanz, Wirkleistung oder Phasenverschiebung erfasst und bestimmt werden. Dabei kann eine solche Messeinrichtung an die elektrisch leitende Verbindung zwischen Spannungsversorgungseinrichtung bzw. Wechselrichter/Frequenzwandler oder an die eine bzw. auch mehrere Induktionsspule(n) angeschlossen sein. Es besteht auch die Möglichkeit, beide genannten Alternativen gemeinsam zu benutzen und weitere Messwerte für die Temperaturbestimmung einzusetzen. Diese können dann gleichzeitig gemessen werden.

In einer vorteilhaften Alternative kann die Messeinrichtung ein Amperemeter sein, mit dem die sich entsprechend temperaturabhängig ändernde elektrische Stromstärke zwischen der Spannungsversorgungseinrichtung und Wechselrichter/Frequenzwandler gemessen werden kann, wobei jedoch die elektrische Spannung konstant gehalten ist.

Eine weitere Alternative oder einer äquivalenten/proportionalen Größe besteht in der Messung der elektrischen Wirkleistung an der mindestens eine Induktionsspule, wobei hier in bekannter Form ein Ampere- und Voltmeter in Reihe und/oder parallel geschaltet sind und mit den gemessenen Stromstärken und Spannungen die Wirkleistung entweder analog oder nach einer Analog-Digitalwandlung durch Berechnung bestimmbar ist.

Es besteht auch die Möglichkeit, die sich temperaturabhängig verändernde Induktivität einer oder mehrerer Induktionsspule (n) zu bestimmen.

Eine digitale Bearbeitung der Mess-Signale kann auch mit dem vorab beschriebenen Amperemeter, mit dem die elektrische Stromstärke zwischen Spannungsversorgungseinrichtung und Wechselrichter/Frequenzwandler bestimmt worden ist, sinnvoll sein. Dies bietet sich insbesondere dann an, wenn die Messwerte in einer elektronischen Datenverarbeitungseinheit weiterverarbeitet werden und dabei zum einen die Temperatur durch Vergleich mit in einem Speicher einer solchen elektronischen Datenverarbeitungseinheit abgelegten Referenzwerten oder Kalibrierverläufen bestimmt werden soll. Die digitale Messwertverarbeitung ist außerdem sinnvoll, wenn nicht nur eine Temperaturmessung, sondern auch eine Temperaturregelung realisiert werden soll.

Soll zur Temperaturmessung, die sich entsprechend abhängig ändernde Frequenz bestimmt werden, kann als Messeinrichtung eine Zeitmesseinrichtung zur Bestimmung der Frequenz an die Induktionsspule(n) oder den Wechselrichter/Frequenzwandler angeschlossen sein. In gleicher Weise kann auch eine Messung der Gangunterschiede zwischen Strom und Spannung zur Bestimmung der sich temperaturabhängig ändernden Phasenverschiebung verschaltet werden.

Bei einer erfindungsgemäßen Anordnung können aber auch mehrere Induktionsspulen in Reihe geschaltet, eingesetzt werden, wobei die Möglichkeit besteht, die elektrische Wirkleistung für jede einzelne der Induktionsspulen gesondert zu bestimmen, wodurch die Temperaturen mit entsprechender Ortsauflösung bestimmt werden können. Es kann aber auch die elektrische Wirkleistung für alle in Reihe geschalteten Induktionsspulen gemeinsam bestimmt werden.

Neben einer reinen Reihenschaltung mehrerer Induktionsspulen können auch Kombinationen von Reihen- und Parallelschaltungen solcher Induktionsspulen genutzt werden. Auch hier können die entsprechenden elektrischen Parameter für jede einzelne Induktionsspule, jeden parallelen Zweig von Induktionsspulen, mit den darin in Reihe geschalteten Induktionsspulen gesondert bestimmt werden.

Vorteilhafterweise werden für die Induktionsspulen solche verwendet, die in Form von Flachspulen ausgebildet sind, wobei sich in diesem Fall die Größe und Form des jeweils ausgebildeten elektromagnetischen Feldes ebenfalls vorteilhaft auswirken kann.

Die Induktionsspulen und hier insbesondere die erwähnten Flachspulen können beispielsweise in einem ebenen Träger, aus einem elektrisch nicht leitenden Material angeordnet werden und diese Träger in einer oder mehreren übereinander angeordneten Ebenen in einem Gehäuse angeordnet werden, wobei in diesem Gehäuse dann ein oder mehrere Gegenstände, die jeweils innerhalb des elektromagnetischen Feldes einer Induktionsspule angeordnet sind, induktiv erwärmt werden.

Gleichzeitig mit der induktiven Erwärmung kann mit der vorab beschriebenen erfindungsgemäßen Lösung die Temperatur des einen oder auch mehrerer Gegenstände oder eine Temperaturänderung innerhalb eines vorgebbaren Temperaturintervalls bestimmt werden. Dabei können die Mess-Signale zur geregelten Erwärmung der Gegenstände oder zur Verhinderung des Über- oder Unterschreitens von Minimal- oder Maximaltemperaturen genutzt werden.

Dabei kann die Temperaturerfassung für die einzelnen Induktionsspulen und für im Bereich der elektromagnetischen Felder dieser Induktionsspulen angeordnete Gegenstände in den einzelnen Ebenen gesondert gemessen und gegebenenfalls auch geregelt werden.

Besonders vorteilhaft kann die Erfindung zur gezielten Erwärmung von Speisen, die in Behältnissen, die induktiv erwärmt werden können, aufgenommen sind, eingesetzt werden.

Für die Beeinflussung der Erwärmung, beispielsweise zur Vermeidung des Überschreitens bestimmter vorgebbarer maximaler Heizraten kann mittels der Messwerte und einem Regelkreis, z.B. die Versorgungsspannung für den Wechselrichter/Frequenzwandler bzw. der Wechselrichter/Frequenzwandler und entsprechend die Erwärmungsleistung entsprechend geregelt werden.

Das Erreichen von vorgebbaren Temperaturen oder Temperaturänderungen wird dadurch bestimmt, dass der Anstieg, Abfall oder der Verlauf der sich temperaturabhängig ändernden Messwerte innerhalb vorgebbarer Zeitintervalle bestimmt wird, wobei in diesem Falle ein Vergleich mit z.B. empirisch ermittelten Referenzanstiegswerten oder Kalibrierverläufen durchführbar ist. Solche Referenzwerte oder Kalibrierverläufe können in einem Speicher einer elektronischen Datenverarbeitungseinheit hinterlegt und mit den entsprechend digitalisierten und gegebenenfalls vorbearbeiteten Mess-Signalen verglichen und bei festgestellter Übereinstimmung die jeweilige Temperatur bzw. eine Temperaturänderung bestimmt werden.

Des Weiteren besteht die Möglichkeit, temporär die jeweilige elektrische Versorgungsspannung für Induktionsspulen mit vorgebbaren Spannungsimpulsen zu überlagern. Dabei können Einzelimpulse mit bekannter Amplitude und Zeitdauer, aber auch mehrere solcher Spannungsimpulse mit bekannter Frequenz, Periode oder bekannten Zeitabständen zueinander überlagert werden. Für die Auswertung kann dann das jeweilige Abfallverhalten der bereits erwähnten elektrischen oder elektromagnetischen Größen gemessen bzw. bestimmt werden, um Rückschlüsse auf die jeweilige Temperatur schließen zu können.

Nachfolgend soll die Erfindung beispielhaft erläutert werden.

Dabei zeigt:

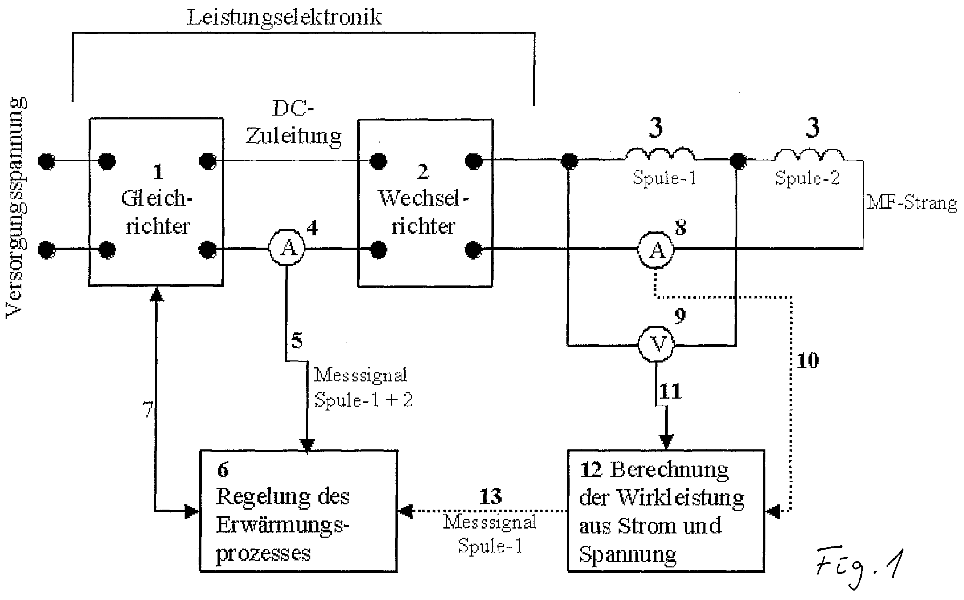

- Figur 1: ein Blockschaltbild für ein Beispiel einer erfindungsgemäßen Anordnung.

In Figur 1 ist ein Blockschaltbild für ein Beispiel einer erfindungsgemäßen Anordnung, schematisch dargestellt. Dabei wird als Spannungsversorgungseinheit 1 ein Gleichrichter, der auch mehrphasig ausgebildet sein kann, verwendet, der mit einem Wechselrichter 2 elektrisch leitend verbunden ist. An dem hier gezeigten Beispiel sind an den Wechselrichter 2 zwei in Reihe geschaltete Induktionsspulen 3 angeschlossen, die mit einer Wechselspannung bekannter Frequenz beaufschlagt werden können.

Bei dem in Figur 1 gezeigten Beispiel ist eine Alternative, die Messung des elektrischen Stromes mit einem Amperemeter 4, das in einer Verbindungsleitung zwischen Gleichrichter, als Spannungsversorgungseinrichtung 1 und Wechselrichter 2 geschaltet worden ist, so dass die elektrische Leistung, bei konstanter elektrischer Spannung als Mess-Signal über die Leitung 5, entweder, wie bei diesem Beispiel gezeigt, auf einen elektronischen Steuer- und Regelkreis 6 nach einer Analog-Digitalwandlung oder in dieser Form in eine nicht dargestellte elektronische Datenverarbeitungseinheit gegeben werden kann. Das Mess-Signal kann nach Bestimmung der elektrischen Leistung für diesen Zweig der Schaltung zur Bestimmung und Anzeige der jeweiligen Temperatur im Bereich der elektromagnetischen Felder der Induktionsspulen 3 bzw. zur Regelung der Spannung des Gleichrichters 1 über die Leitung 7 genutzt werden.

In dem Teil der Schaltung, in dem die beiden Induktionsspulen 3 in Reihe geschaltet sind, ist einmal ein Amperemeter 8 zur Messung der elektrischen Stromstärke in Reihe und zumindest zu einer der beiden Induktionsspulen 3 ein Voltmeter 9 zur Bestimmung der elektrischen Spannung parallel geschaltet. Die beiden Messwerte für den elektrischen Strom und die elektrische Spannung werden über die Leitungen 10 und 11 auf einen Multiplizierer 12, gegebenenfalls auch ein anderes geeignetes Auswerte/Aufbereitungsglied, zur Berechnung der elektrischen Wirkleistung, was sowohl analog, wie auch bereits digital erfolgen kann, geführt. Von diesem Multiplizierer 12, wird das die elektrische Wirkleistung bei diesem Beispiel repräsentierende Mess-Signal über die Leitung 13 auf den Steuer- und Regelkreis 6 gegeben und kann dort zur Bestimmung der jeweiligen Temperatur, Temperaturänderung oder zur Regelung der elektrischen Ausgangsspannung des Gleichrichters 1 genutzt werden.

## Patentansprüche

1. Anordnung zur Bestimmung von Temperaturen im Bereich eines elektromagnetischen Feldes mindestens einer Induktionsspule,
bei der mindestens eine Induktionsspule (3) an einen Wechselrichter (2) oder an einen Frequenzwandler und
der Wechselrichter (2) oder der Frequenzwandler an eine Spannungsversorgungseinrichtung angeschlossen sind;
oder zumindest eine Induktionsspule (3) an eine Spannungsversorgungseinrichtung mit bekannter Ausgangsfrequenz angeschlossen ist,
**dadurch gekennzeichnet,**
**dass** an die Spannungsversorgungseinrichtung und/oder die mindestens eine Induktionsspule (3) eine Messeinrichtung (8, 9) zur Bestimmung des Anstiegs oder des Abfalls der sich temperaturabhängig innerhalb vorgebbarer Zeitintervalle verändernden elektrischen Leistung, der Impedanz, des Wirkwiderstands oder der Phasenverschiebung angeschlossen ist.

2. Anordnung nach Anspruch 1,
**dadurch gekennzeichnet, dass** die Messeinrichtung ein zur Messung der elektrischen Stromstärke zwischen die Spannungsversorgungseinrichtung und Wechselrichter/Frequenzwandler (2) geschaltetes Amperemeter (8) ist.

3. Anordnung nach Anspruch 1 oder 2,
**dadurch gekennzeichnet, dass** die Messeinrichtung aus in den Stromkreis der mindestens einen Induktionsspule (3) zur Bestimmung der elektrischen Wirkleistung geschalteten Ampere- und Voltmeter gebildet (8, 9) ist.

4. Anordnung nach Anspruch 1,
**dadurch gekennzeichnet, dass** die Messeinrichtung zur Bestimmung der temperaturabhängig auftretenden Phasenverschiebung an die mindestens eine Induktionsspule (3) oder den Wechselrichter/Frequenzwandler (2) angeschlossen ist.

5. Anordnung nach einem der Ansprüche 1 bis 4,
**dadurch gekennzeichnet, dass** mehrere Induktionsspulen (3) in einer Reihenschaltung verschaltet sind.

6. Anordnung nach einem der Ansprüche 1 bis 4,
**dadurch gekennzeichnet, dass** mehrere Induktionsspulen (3) in Reihe und/oder parallel geschaltet sind.

7. Anordnung nach Anspruch 5 oder 6,
**dadurch gekennzeichnet, dass** die elektrische Leistung für jede einzelne Induktionsspule (3) oder mehrere in Reihe geschaltete Induktionsspulen (3) gesondert messbar ist.

8. Anordnung nach einem der Ansprüche 1 bis 7,
**dadurch gekennzeichnet, dass** mindestens eine Induktionsspule (3) als Flachspule ausgebildet ist.

9. Anordnung nach einem der Ansprüche 1 bis 8,
**dadurch gekennzeichnet, dass** an die Spannungsversorgungseinrichtung ein Regelkreis (6) angeschlossen ist.

10. Anordnung nach einem der Ansprüche 1 bis 8,
**dadurch gekennzeichnet, dass** an den Wechselrichter (2) oder Frequenzwandler ein Regelkreis (6) angeschlossen ist.

11. Anordnung nach einem der Ansprüche 1 bis 10,
**dadurch gekennzeichnet, dass** eine Induktionsspule (3) als Messspule an den Regelkreis (6) angeschlossen ist.

12. Anordnung nach einem der Ansprüche 1 bis 11,
**dadurch gekennzeichnet, dass** die Messeinrichtung zur Bestimmung der elektrischen Leistung oder Phasenverschiebung an den Regelkreis angeschlossen ist.

13. Anordnung nach einem der Ansprüche 1 bis 12,
**dadurch gekennzeichnet, dass** mehrere Induktionsspulen (3) innerhalb eines ebenen Trägers angeordnet und mehrere solcher ebenen Träger in mehreren Ebenen übereinander innerhalb eines Gehäuses angeordnet sind.

14. Anordnung nach einem der Ansprüche 1 bis 13,
**dadurch gekennzeichnet, dass** die einzelnen in unterschiedlichen Ebenen angeordneten Induktionsspulen (3) jeweils gesondert geregelt sind.

15. Verfahren zur Bestimmung von Temperaturen im Bereich eines elektromagnetischen Feldes mindestens einer Induktionsspule (3), die an einen mit einer Spannungsversorgungseinrichtung verbundenen Wechselrichter (2) oder Frequenzumwandler angeschlossen ist,
**dadurch gekennzeichnet, dass**
der Anstieg oder der Abfall der sich innerhalb vorgebbarer Zeitintervalle temperaturabhängig ändernden elektrischen Leistung oder Phasenverschiebung an der Spannungsversorgungseinrichtung und/oder der mindestens einen Induktionsspule (3) bestimmt wird.

16. Verfahren nach Anspruch 15,
**dadurch gekennzeichnet, dass** die elektrische Stromstärke zwischen der Spannungsversorgungseinrichtung und Wechselrichter/Frequenzwandler (2) gemessen wird.

17. Verfahren nach einem der Ansprüche 15 oder 16,
**dadurch gekennzeichnet, dass** die Spannungsversorgungseinrichtung einen Wechselrichter (2) mit einer Gleichspannung betreibt.

18. Verfahren nach Anspruch 15,
**dadurch gekennzeichnet, dass** die elektrische Wirkleistung und/oder Impedanz der mindestens einen Induktionsspule (3) gemessen wird.

19. Verfahren nach einem der Ansprüche 15 bis 18,
**dadurch gekennzeichnet, dass** die Temperatur oder Temperaturänderung eines im Bereich des elektro-magnetischen Feldes einer Induktionsspule (3) angeordneten elektrisch leitenden oder ferromagnetischen Gegenstandes gemessen wird.

20. Verfahren nach einem der Ansprüche 15 bis 19,
**dadurch gekennzeichnet, dass** die Temperatur oder Temperaturänderung eines zu erwärmende Speisen enthaltenden Behältnisses gemessen wird.

21. Verfahren nach einem der Ansprüche 15 bis 20,
**dadurch gekennzeichnet, dass** mit der gemessenen Temperatur oder Temperaturänderung die Erwärmung eines Gegenstandes oder Speisen enthaltenden Behältnisses geregelt wird.

22. Verfahren nach Anspruch 21,
**dadurch gekennzeichnet, dass** die Versorgungsspannung oder -stromstärke für den Wechselrichter/Frequenzwandler (2) geregelt wird.

23. Verfahren nach einem der Ansprüche 15 bis 22,
**dadurch gekennzeichnet, dass** die sich temperaturabhängig verändernde Induktivität mindestens einer Induktionsspule (3) bestimmt wird.

24. Verfahren nach einem der Ansprüche 15 bis 23,
**dadurch gekennzeichnet, dass** die Versorgungsspannung für die Induktionsspule(n) (3) mit vorgebbaren Spannungsimpulsen überlagert und das Abfallverhalten bestimmt wird.

25. Verfahren nach Anspruch 15,
**dadurch gekennzeichnet, dass** die elektrische Leistung oder Phasenverschiebung an der Spannungsversorgungseinrichtung und/oder der mindestens einen Induktionsspule gleichzeitig gemessen wird.

## Claims

1. Arrangement for determining temperatures in the region of an electromagnetic field of at least one induction coil,
in which at least one induction coil (3) is connected to an inverter (2) or to a frequency converter and the inverter (2) or the frequency converter are connected to a voltage supply device;
or at least one induction coil (3) is connected to a voltage supply device with known output frequency,
**characterised**
**in that** a measuring device (8, 9) for determining the rise or fall of the electric power, impedance, effective resistance or phase displacement, changing temperature-dependently within predeterminable time intervals, is connected to the voltage supply device and/or the at least one induction coil (3).

2. Arrangement according to Claim 1, **characterised in that** the measuring device is an ammeter (8), connected between the voltage supply device and inverter/frequency converter (2), for measuring the electric current.

3. Arrangement according to Claim 1 or 2, **characterised in that** the measuring device is formed from ammeter and voltmeter (8, 9), connected in the circuit of the at least one induction coil (3), for determining the electric effective power.

4. Arrangement according to Claim 1,
**characterised in that** the measuring device for determining the temperature-dependently occurring phase displacement, is connected to the at least one induction coil (3) or the inverter/frequency converter (2).

5. Arrangement according to one of Claims 1 to 4, **characterised in that** a plurality of induction coils (3) are connected in a series connection.

6. Arrangement according to one of Claims 1 to 4, **characterised in that** a plurality of induction coils (3) are connected in series and/or in parallel.

7. Arrangement according to Claim 5 or 6,
**characterised in that** the electric power for each individual induction coil (3) or a plurality of induction coils (3) connected in series is measurable separately.

8. Arrangement according to one of Claims 1 to 7, **characterised in that** at least one induction coil (3) is formed as a flat coil.

9. Arrangement according to one of Claims 1 to 8, **characterised in that** a regulating circuit (6) is connected to the voltage supply device.

10. Arrangement according to one of Claims 1 to 8, **characterised in that** a regulating circuit (6) is connected to the inverter (2) or frequency converter.

11. Arrangement according to one of Claims 1 to 10, **characterised in that** an induction coil (3) as measuring coil is connected to the regulating circuit (6).

12. Arrangement according to one of Claims 1 to 11, **characterised in that** the measuring device for determining the electric power or phase displacement is connected to the regulating circuit.

13. Arrangement according to one of Claims 1 to 12, **characterised in that** a plurality of induction coils (3) are arranged within a plane support and a plurality of such plane supports are arranged in a plurality of planes one above the other within a housing.

14. Arrangement according to one of Claims 1 to 13, **characterised in that** the individual induction coils (3) arranged in different planes are each regulated separately.

15. Method for determining temperatures in the region of an electromagnetic field of at least one induction coil (3) which is connected to an inverter (2) or frequency converter connected to a voltage supply device,
**characterised in that**
the rise or fall of the electric power or phase displacement, changing temperature-dependently within predeterminable time intervals, at the voltage supply device and/or or the at least one induction coil (3) is determined.

16. Method according to Claim 15,
**characterised in that** the electric current between the voltage supply device and inverter/frequency converter (2) is measured.

17. Method according to one of Claims 15 or 16,
**characterised in that** the voltage supply device operates an inverter (2) with a direct-current voltage.

18. Method according to Claim 15,
**characterised in that** the electric effective power and/or impedance of the at least one induction coil (3) is measured.

19. Method according to one of Claims 15 to 18,
**characterised in that** the temperature or temperature change of an electrically conductive or ferromagnetic object arranged in the region of the electromagnetic field of an induction coil (3) is measured.

20. Method according to one of Claims 15 to 19,
**characterised in that** the temperature or temperature change of a receptacle containing food to be heated is measured.

21. Method according to one of Claims 15 to 20,
**characterised in that**, with the measured temperature or temperature change, the heating of an object or of a food-containing receptacle is regulated.

22. Method according to Claim 21,
**characterised in that** the supply voltage or supply current for the inverter/frequency converter (2) is regulated.

23. Method according to one of Claims 15 to 22,
**characterised in that** the temperature-dependently changing inductance of at least one induction coil (3) is determined.

24. Method according to one of Claims 15 to 23,
**characterised in that** the supply voltage for the induction coil(s) (3) is overlaid with predeterminable voltage pulses and the fall behaviour is determined.

25. Method according to Claim 15,
**characterised in that** the electric power or phase displacement at the voltage supply device and/or the at least one induction coil is measured simultaneously.

## Revendications

1. Système pour déterminer des températures dans la zone d'un champ électromagnétique d'au moins une bobine d'induction,
dans lequel au moins une bobine d'induction (3) est connectée à un onduleur (2) ou à un convertisseur de fréquence et l'onduleur (2) ou le convertisseur de fréquence sont connectés à un dispositif d'alimentation en tension ;
ou au moins une bobine d'induction (3) est connectée à un dispositif d'alimentation en tension dont la fréquence de sortie est connue,
**caractérisé en ce que**
un dispositif de mesure (8, 9) destiné à déterminer la montée ou la baisse de la puissance électrique variant en fonction de la température dans des intervalles de temps prédéfinissables, de l'impédance, de la résistance active ou du décalage de phase est connecté au dispositif d'alimentation en tension et/ou à ladite au moins une bobine d'induction (3).

2. Système selon la revendication 1,
**caractérisé en ce que** le dispositif de mesure est un ampèremètre (8) branché entre le dispositif d'alimentation en tension et l'onduleur/le convertisseur de fréquence (2) pour mesurer l'intensité du courant électrique.

3. Système selon la revendication 1 ou la revendication 2,
**caractérisé en ce que** le dispositif de mesure est formé d'un ampèremètre et d'un voltmètre (8, 9) branchés dans le circuit de ladite au moins une bobine d'induction (3) pour déterminer la puissance électrique active.

4. Système selon la revendication 1,
**caractérisé en ce que** le dispositif de mesure est connecté à ladite au moins une bobine d'induction (8) ou à l'onduleur/au convertisseur de fréquence (2) pour déterminer le décalage de phase se produisant en fonction de la température.

5. Système selon l'une des revendications 1 à 4,
**caractérisé en ce que** plusieurs bobines d'induction (3) sont couplées en série.

6. Système selon l'une des revendications 1 à 4,
**caractérisé en ce que** plusieurs bobines d'induction (3) sont couplées en série et/ou en parallèle.

7. Système selon la revendication 5 ou la revendication 6,
**caractérisé en ce que** la puissance électrique est mesurable séparément pour chaque bobine d'induction (3) individuelle ou plusieurs bobines d'induction (3) couplées en série.

8. Système selon l'une des revendications 1 à 7,
**caractérisé en ce qu'**au moins une bobine d'induction (3) est réalisée sous la forme d'une bobine plate.

9. Système selon l'une des revendications 1 à 8,
**caractérisé en ce qu'**un circuit de régulation (6) est connecté au dispositif d'alimentation en tension.

10. Système selon l'une des revendications 1 à 8,
**caractérisé en ce qu'**un circuit de régulation (6) est connecté à l'onduleur (2) ou au convertisseur de fréquence.

11. Système selon l'une des revendications 1 à 10,
**caractérisé en ce qu'**une bobine d'induction (3) est connectée en tant que bobine de mesure au circuit de régulation (6).

12. Système selon l'une des revendications 1 à 11,
**caractérisé en ce que** le dispositif de mesure destiné à déterminer la puissance électrique ou le décalage de phase est connecté au circuit de régulation.

13. Système selon l'une des revendications 1 à 12,
**caractérisé en ce que** plusieurs bobines d'induction (3) sont disposées à l'intérieur d'un support plan et plusieurs de ces supports plans sont disposés les uns au-dessus des autres dans plusieurs plans à l'intérieur d'un boîtier.

14. Système selon l'une des revendications 1 à 13,
**caractérisé en ce que** chacune des bobines d'induction (3) individuelles disposées dans des plans différents est régulée séparément.

15. Procédé pour déterminer des températures dans la zone d'un champ électromagnétique d'au moins une bobine d'induction (3) qui est connectée à un onduleur (2) ou un convertisseur de fréquence relié à un dispositif d'alimentation en tension, **caractérisé en ce que**
la montée ou la baisse de la puissance électrique ou du décalage de phase variant en fonction de la température dans des intervalles de temps prédéfinissables est déterminée au niveau du dispositif d'alimentation en tension et/ou de ladite au moins une bobine d'induction (3).

16. Procédé selon la revendication 15,
**caractérisé en ce que** l'intensité du courant électrique est mesurée entre le dispositif d'alimentation en tension et l'onduleur/le convertisseur de fréquence (2).

17. Procédé selon l'une des revendications 15 ou 16,
**caractérisé en ce que** le dispositif d'alimentation en tension alimente un onduleur (2) en tension continue.

18. Procédé selon la revendication 15,
**caractérisé en ce que** la puissance électrique active et/ou l'impédance de ladite au moins une bobine d'induction (3) est mesurée.

19. Procédé selon l'une des revendications 15 à 18,
**caractérisé en ce que** la température ou la variation de température d'un objet électriquement conducteur ou ferromagnétique disposé dans la zone du champ électromagnétique d'une bobine d'induction (3) est mesurée.

20. Procédé selon l'une des revendications 15 à 19,
**caractérisé en ce que** la température ou la variation de température d'un récipient contenant des plats à chauffer est mesurée.

21. Procédé selon l'une des revendications 15 à 20,
**caractérisé en ce que** la température ou la variation de température mesurée est utilisée pour réguler le chauffage d'un objet ou d'un récipient contenant des plats.

22. Procédé selon la revendication 21,
**caractérisé en ce que** la tension ou l'intensité du courant d'alimentation de l'onduleur/du convertisseur de fréquence (2) est régulée.

23. Procédé selon l'une des revendications 15 à 22,
**caractérisé en ce que** l'inductance variant en fonction de la température d'au moins une bobine d'induction (3) est déterminée.

24. Procédé selon l'une des revendications 15 à 23,
**caractérisé en ce que** des impulsions de tension prédéfinissables sont superposées à la tension d'alimentation de la ou des bobine(s) d'induction (3) et que le comportement de baisse est déterminé.

25. Procédé selon la revendication 15,
**caractérisé en ce que** la puissance électrique ou le décalage de phase est mesuré(e) simultanément au niveau du dispositif d'alimentation en tension et/ou de ladite au moins une bobine d'induction.
